# EUROPÄISCHE PATENTSCHRIFT

(11) **EP 1 482 183 B1**
(45) Veröffentlichungstag und Bekanntmachung des Hinweises auf die Patenterteilung: **07.05.2008**
(21) Anmeldenummer: 04011473.8
(22) Anmeldetag: 14.05.2004
(51) Int. Cl.: F16B 2/14, F16B 12/20, F16B 12/26, F16B 12/32, F16B 12/38

(54) **Anordnung zur Aufnahme eines verriegelbaren und lösbaren Einschub-Elementes**
arrangement for retaining a locking and releasable insert element
dispositif pour recevoir un insert verrouillable et détachable

(30) Priorität: 27.05.2003 DE 20308234 U
(43) Veröffentlichungstag der Anmeldung: 01.12.2004
(73) Patentinhaber: SFS intec Holding AG, 9435 Heerbrugg (CH)
(72) Erfinder: Schwarz, Helmut, 71263 Weil der Stadt (DE); Homner, Bernhard, 75365 Calw (DE)

(56) Entgegenhaltungen:
- DE-A1- 2 629 781
- DE-U1- 29 516 952
- US-A- 3 664 011
- US-A- 3 680 898
- US-A- 4 662 531

## Beschreibung

Die Erfindung bezieht sich auf eine lösbare VerbindungsAnordnung, bei der ein Einschub-Element mit einem Aufnahme-Schacht lösbar verbunden wird.
Einschub-Element und Aufnahme-Schacht können mit je einem Bauteil verbunden werden oder selbst ein solches Bauteil darstellen.

Es ist eine große Zahl solcher oft sehr unterschiedlich gestalteter Verbindungsanordnungen bekannt:
z.B. sogenannte Bajonettverschlüsse, nach dem ""Schubkasten-Prinzip" arbeitende Verbindungsanordnungen usw.
Alle diese Anordnungen genügen speziellen zweckgebundenen Aufgaben.
Es ist Aufgabe der Erfindung, eine neue lösbare VerbindungsAnordnung vorzusehen, bei der ein Einschub-Element mit einem Aufnahme-Schacht in gleichbleibender Position lösbar verbindbar ist.
Diese Aufgabe der Erfindung wird durch die im kennzeichnenden Teil des Anspruchs 1 genannten Merkmale gelöst.
Vorteilhafte Weiterbildungen der Erfindung sind in den Unteransprüchen gekennzeichnet.

Besonders vorteilhaft ist die erfindungsgemäße Anordnung für Scharnier-Verbindungen einsetzbar, bei denen z.B. ein Schwenk-Deckel häufig von einer Gepäckbox vorübergehend entfernt werden muß (z.B. bei Wartungsarbeiten in Flugzeugen).
Üblicherweise sind Schwenk-Deckel und Gepäckbox fest mit den Scharnierblättern verbunden, z.B. durch Verschrauben oder Vernieten.

Eine solche feste Verbindung ist für ein häufiges nur vorübergehendes Entfernen des Schwenkdeckels nachteilig.
Gemäß der erfindungsgemäßen Anordnung wird das mit der Gepäckbox zu verbindende Scharnierblatt als Einsteckteil (Einschub-Element) ausgeführt; es wird in einen fest mit der Gepäckbox verbundenen Aufnahme-Schacht eingeführt und dort in besonderer Weise in seiner Lage fixiert, wobei selbsttätig eine Verriegelung erfolgt. Die Verriegelung ist lösbar.
Hierdurch kann der Schwenkdeckel immer wieder leicht von der Gepäckbox gelöst werden. Dies ist erforderlich, wenn entsprechende Wartungen ( z.B. im Flugzeug) anstehen, bei denen der Schwenkdeckel vorübergehend entfernt werden muß ( weil er sonst die Wartungsarbeiten aus räumlichen Gründen behindern würde.

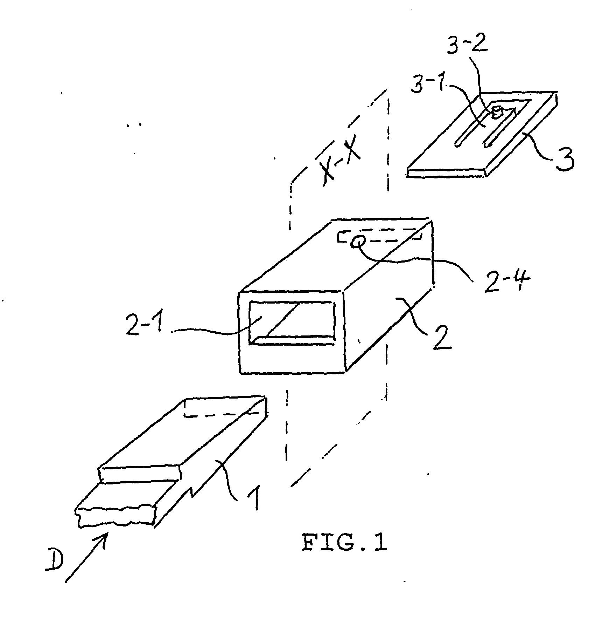

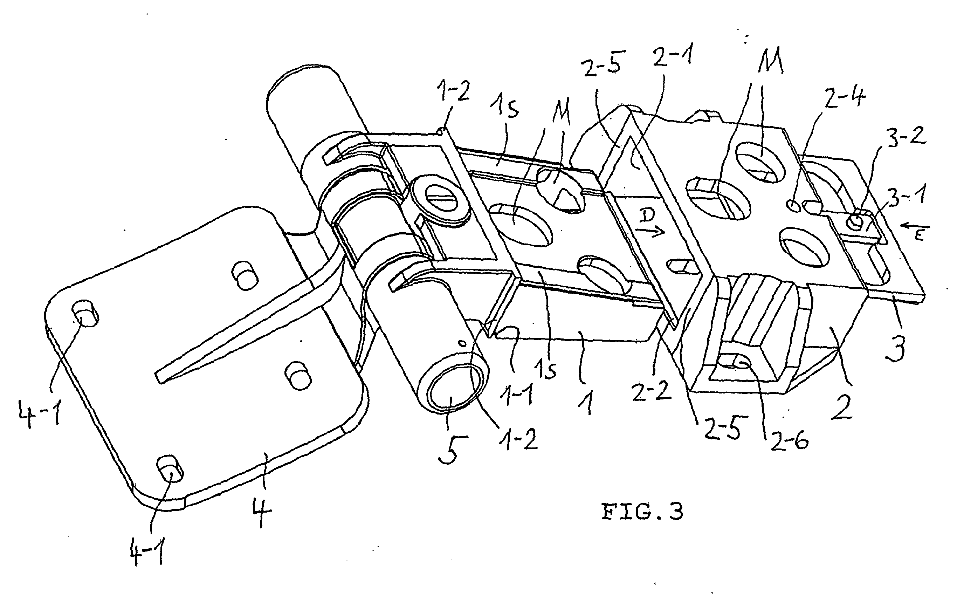

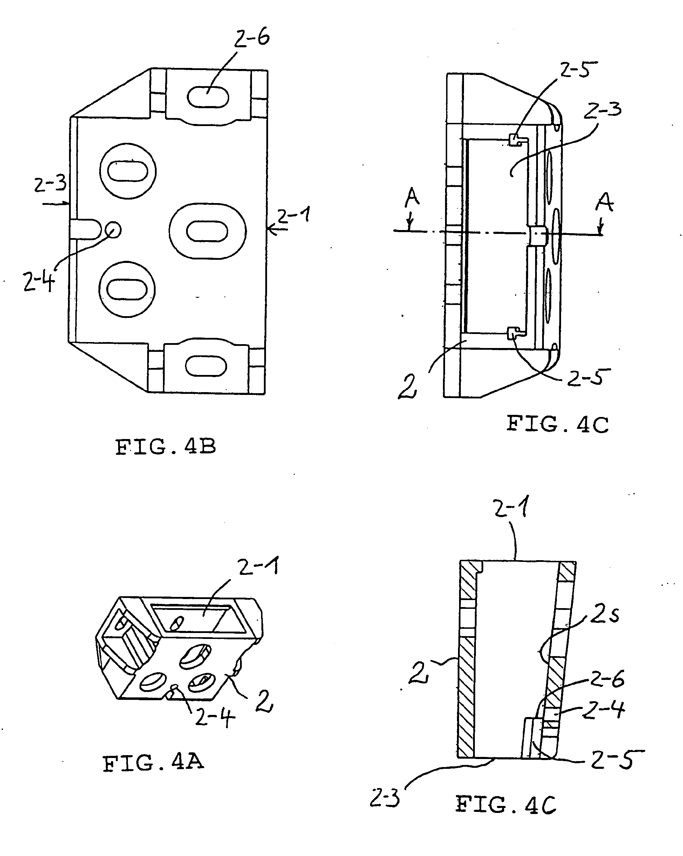

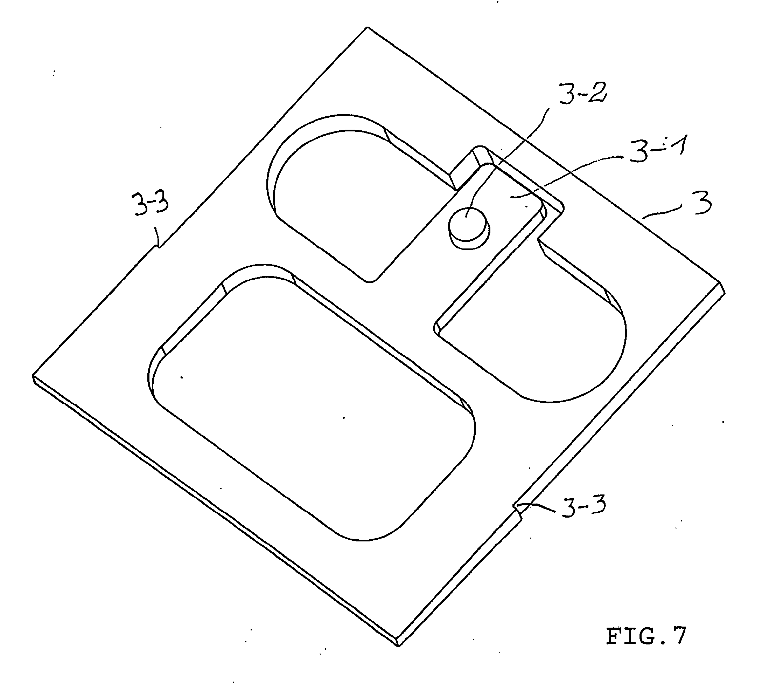

Ausführungsbeispiele der Erfindung sind in den Zeichnungen dargestellt und werden im folgenden näher beschrieben.
Es zeigen:
FIG. 1
   eine schematische perspektivische Darstellung der erfindungsgemäßen Aufnahme-Anordnung;
FIG. 2A
   eine Schnittdarstellung der erfindungsgemäßen Aufnahme-Anordnung für die Schnittebene X-X gemäß FIG.1; in dieser Darstellung ist das Einschub-Element vollends im Aufnahme-Schacht angeordnet, während das Abstands-Element teilweise aus dem Aufnahme-Schacht heraussteht;
FIG. 2B
   eine Schnittdarstellung der erfindungsgemäßen Aufnahme-Anordnung für die Schnittebene X-X in FIG.1; in dieser Darstellung sind das Einschub-Element und das Abstands-Element vollends im Aufnahme-Schacht angeordnet; die Anordnung befindet sich in Verriegelungs-Position ;
FIG.3
   eine perspektische Darstellung einer erfindungsgemäßen Aufnahme-Anordnung für ein Einschub-Element, welches ein Scharnierblatt eines aus 2 Scharnierblättern bestehenden Scharniers darstellt;
FIG.4A
   eine perspektivische Darstellung des Aufnahmeschachtes gemäß FIG. 3 mit schräger Blickrichtung auf dessen Oberseite und in dessen Aufnahme-Öffnung;
FIG.4B
   die Draufsicht des Aufnahmeschachtes gemäß FIG.4A;
FIG.4C
   die rückwärtige Seitenansicht des Aufnahmeschachtes gemäß FIG. 4A;
FIG. 4C
   die Schnitt-Aufsicht des Aufnahmeschachtes gemäß Schnittebene A-A in FIG.4A ;
FIG. 5
   eine perspektivische Darstellung des Aufnahme-Schachtes gemäß FIG. 3 mit schräger Blickrichtung auf dessen Unterseite und in dessen rückwärtige Öffnung;
FIG. 6
   eine perspektivische Darstellung des Aufnahme-Schachtes gemäß FIG. 3 mit schräger Blickrichtung auf dessen Unterseite und in dessen rückwärtige Öffnung mit herausstehendem Abstands-Element;
FIG.7
   eine perspektivische Darstellung des Abstands-Elementes 3 gemäß FIG. 3;
FIG. 8A
   die Draufsicht des Abstandselementes gemäß FIG. 7;
FIG. 8B
   die Vorderansicht des Abstandselementes gemäß FIG. 7;
FIG. 8C
   die untere Ansicht des Abstandselementes gemäß FIG. 7;
FIG.9
   eine perspektivische Darstellung des Einschub-Elementes gemäß FIG. 3 mit schräger Blickrichtung auf dessen Unterseite zur Verdeutlichung seines U-Profil-Abschnittes.

Fig.1 zeigt
   eine schematische perspektivische Darstellung der erfindungsgemäßen Aufnahme-Anordnung;
FIG. 2A zeigt
   eine Schnittdarstellung der erfindungsgemäßen Aufnahme-Anordnung für die Schnittebene X-X in FIG.1. In dieser Darstellung ist nur das Einschub-Element 1 vollends im Aufnahme-Schacht 2 angeordnet, während das Abstands-Element 3 noch teilweise aus dem Aufnahme-Schacht 2 heraussteht;
FIG. 2B zeigt
   eine Schnittdarstellung der erfindungsgemäßen Aufnahme-Anordnung für die Schnittebene X-X in FIG.1; in dieser Darstellung sind sowohl das Einschub-Element 1 als auch das Abstands-Element 3 vollends im Aufnahme-Schacht 2 angeordnet. Die erfindungsgemäße Anordnung befindet sich in Verriegelungs-Position.
Sie besteht aus dem Einschub-Element 1, dem Aufnahme- Schacht 2 mit der vorderen Einführ-Öffnung 2-1 zur Aufnahme des Einschub-Elements 1 in Einschub-Richtung D und aus dem im Aufnahmeschacht positionierbaren Abstands-Element 3. Das Einschub-Element 1 kann ein Bauteil oder -wie auch der Aufnahme-Schacht- mit einem solchen verbunden sein.

In Fig.3 ist eine praktische Ausführungsform der erfindungsgemäßen Anordnung dargestellt; hier ist zu erkennen, daß das Einschub-Element 1 Teil eines ersten Scharnierblattes ist - für ein aus zwei Scharnierblättern 1 und 4 mit einer gemeinsamen Achse 5 bestehenden Scharnier-. Dieses erste Scharnierblatt ist in den Aufnahme-Schacht 2 aufnehmbar. Im Aufnahme-Schacht 2 erfolgt die Verriegelung der Anordnung. Auf dem Abstands-Element 3 ist ein Federarm 3-1 mit einer Rastnase 3-2 angeordnet, die in Verriegelungs-Position in eine Aussparung oder Öffnung 2-4 des Aufnahme-Schachtes 2 eingreift. Das Einschub-Element 1 kann sich dann nicht mehr aus dem Aufnahme-Schacht 2 lösen. Die Verriegelung ist lösbar.

Der Aufnahme-Schacht bzw. das zweite Scharnierblatt 4 ist z.B. durch Schraubverbindungen fest mit einer Gepäck-Box bzw. ihrem Schwenk-Deckel verbunden.

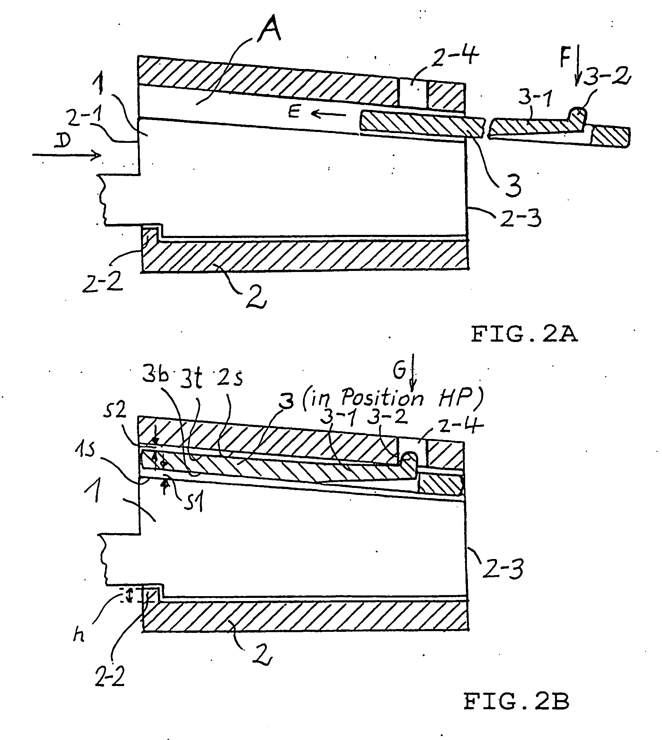

Das Einschub-Element 1 wird in Einschubrichtung D über die Schwelle 2-2 hinweg in den Aufnahme-Schacht eingeführt ( s. FIG. 2A und FIG.3 ).
Im eingeschobenen Zustand des Einschub-Elementes 1 ist zwischen der oberen Seite 1s des Einschub-Element 1 und der Innenseite 2s des Aufnahme-Schachtes 2 ein Abstandsbereich A ausgebildet. In diesem Abstandsbereich A ist das Abstands-Element 3 verschieblich angeordnet.
Während des Einführens des Einschub-Elements 1 in den Aufnahme-Schacht 2 ist das Abstands-Element 3 entsprechend der Darstellung in FIG. 2A positioniert, damit es das Einschub-Element 1 beim Einführen nicht behindern kann.
Danach wird das Abstands-Element 3 in Richtung E bewegt bis es eine Verriegelungs-Position HP zwischen dem Einschub-Element 1 und der oberen Schachtwandung (FIG. 2B) einnimmt. In dieser Verriegelungs-Position HP ist das Einschub-Element 1 in seiner Lage im Aufnahme-Schacht 2 fixiert:
Es (1) kann - wegen der noch später erläuterten Keilwirkung des keilstumpfförmigen Einschub-Elementes 1 im sich verengenden Aufnahme-Schacht 2 bzw. wegen des Anschlagens der Randteile 1-2 am Öffnungsrand 2-5, s. FIG. 3, - weder in Richtung D ausweichen, noch kann es sich entgegengesetzt zur Richtung D aus dem Schacht 2 bewegen, weil dort die Schwelle 2-2 für die Stufe 1-1 des Einschub-Elementes 1 als Anschlag wirkt ; und es kann auch nicht - aufgrund der vertikalen Spiels s=s1+s2 (s. FIG. 2B) über die Höhe h der Schwelle 2-2 ausweichen, da h>s ist.
Für andere Ausführungsformen , insbesondere ohne "Keilwirkung" , kann z.B. auch eine rückwärtige Stirnwand (nicht dargestellt) im Aufnahme-Schacht als Anschlag dienen.

Beim Positionieren des Abstands-Elementes 3 in die Verriegelungs-Position HP erfolgt eine selbsttätige Verriegelung:
Das Abstandselement weist einen federnden Arm 3-1 mit einer Rastnase 3-2 am freien Armende auf.
Bei Bewegung des Abstands-Elementes 3 in Richtung E wird die Rastnase 3-2 in Richtung F ausgelenkt, sobald sie in den Aufnahme-Schacht 2 gerät. Wenn die Rastnase 3-2 bei weiterer Verschiebung des Abstands-Elementes 3 unter die Öffnung 2-4 in der oberen Wandung des Aufnahme-Schachtes 2 gelangt, rastet sie - bedingt durch die Federkraft des Armes 3-1 selbsttätig in diese Öffnung 2-4 ein. Damit ist jedoch die Anordnung verriegelt. Zur Entriegelung wird die Rastnase 3-2 in Richtung G ( z.B. mit Hilfe eines Werkzeuges) aus der Öffnung 2-4 gedrückt unter gleichzeitiger Verschiebung des Abstands-Elements.

In einer besonders vorteilhaften Ausführungsform der erfindungsgemäßen Anordnung weisen das Einschub-Element 1 und und der Aufnahme-Schacht 2 in Einschubrichtung D eine abfallende Schräge 1s bzw. 2s auf.
Die Schräge 1s bedingt eine keilstumpfähnliche Form des Einschub-Elementes. Die sich in Richtung D keilförmig verjüngende Öffnung des Aufnahme-Schachtes 2 kann anschlagbegrenzend für das keilstumpfähnliche Einschub-Element wirken.

Die erfindungsgemäße Anordnung kann sich auf beliebige Querschnitte bzw. Profilquerschnitte des Einschub-Elementes beziehen, egal ob rechteckig, rund oder anders, wobei natürlich der Aufnahme-Schacht an das Einschub-Element angepaßt sein muß, unabhängig davon, ob abfallende Schrägen vorgesehen werden oder nicht.

Ebenso muß für die erfindungsgemäße Anordnung der Abstandsbereich A nicht unbedingt geradlinig abgegrenzt sein; zur Erzielung der Verriegelung können auch andere als nur schieberartige Abstands-Elemente verwendet werden: in diesem Zusammenhang sind alle Elemente geeignet, welche das Einschub-Element im Aufnahme-Schacht in einer Verriegelungs-Position fixieren können. Hierzu zählen auch exzentrisch wirkende oder keilförmige Abstands-Elemente, welche auf das Einschub-Element im Aufnahme-Schacht entweder nur an einer einzigen Stelle oder auch in einem größeren Bereich einwirken, um es in seiner Lage zu fixieren.

Es wurde bereits darauf hingewiesen, daß das Einschub-Element 1 in Verriegelungs-Position HP durch die als Anschlag wirkende Schwelle 2-3 daran gehindert wird, sich entgegengesetzt zur Einschub-Richtung D aus dem Aufnahme-Schacht 2 bewegen zu können.

Für einen solchen Anschlag kommen auch andere Lösungen in Betracht: z.B. ein mit dem Einschub-Element verbundener Zapfen, welcher in eine Aussparung der Aufnahme-Schacht-Wandung eingreift ( oder umgekehrt), um eine gedachte Bewegung entgegengesetzt zu Richtung D zu verhindern.

Anstelle der beschriebenen Rastverbindung (Rast-nase 3-2 / Öffnung 2-4) können auch andere bekannte Rastverbindungen verwendet werden.

FIG.3 zeigt
eine perspektische Darstellung einer erfindungsgemäßen Aufnahme-Anordnung für ein Einschub-Element 1, welches ein Scharnierblatt eines aus 2 Scharnierblättern 1 und 4 bestehenden Scharniers darstellt.

Für die in den FIG.1, 2A und 2B nur schematisch dargestellten Teile ( z.B. Einschub-Element 1, Aufnahme-Schacht 2, Abstandselement 3 ) zeigt FIG. 3 eine produktspezifische spezielle Ausführungsform.

Aus Übersichtsgründen werden in FIG. 3 etc. die Bezugszeichen aus FIG. 1 etc. beibehalten.

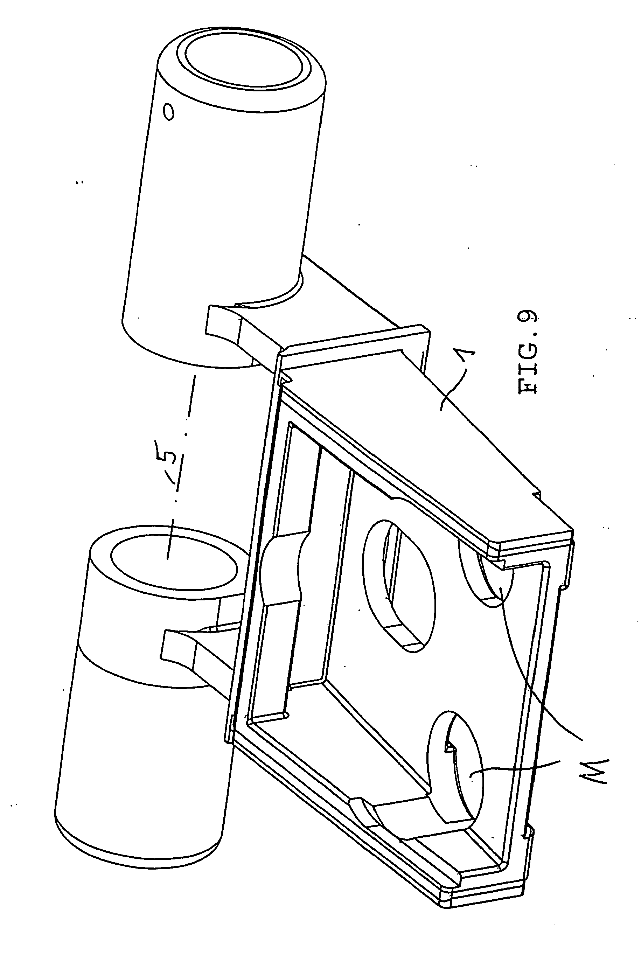

Das Einschub-Element 1 hat eine keilstumpf-ähnliche Form bei einem teilweise U-Profil-ähnlichen Querschnitt ( s. FIG.9). Auf seiner Oberseite weist es randwärts zwei in D-Richtung abfallend schräg verlaufende Gleit-Bahnen 1s auf.

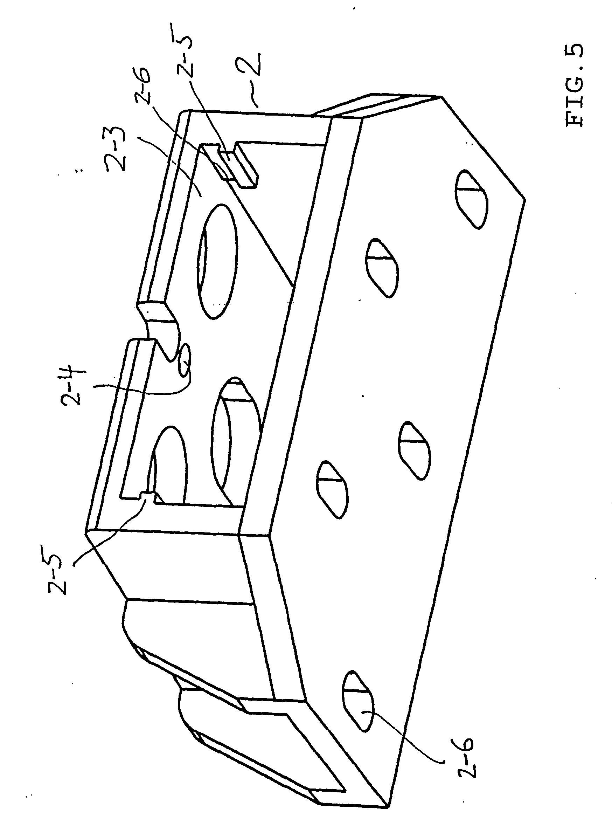

Das Abstands-Element 3 wird durch die Öffnung 2-1 in den Aufnahme-Schacht 2 eingeführt und in eine Position geschoben, in welcher es aus einer rückwärtigen Öffnung 2-3 ( s. FIG.4C, FIG.5) des Aufnahme-Schachtes 2 teilweise heraussteht ( wie in FIG. 3 dargestellt). Das Abstands-Element hat eine keilartige Form mit einem sich in Richtung E verjüngenden Querschnitt.

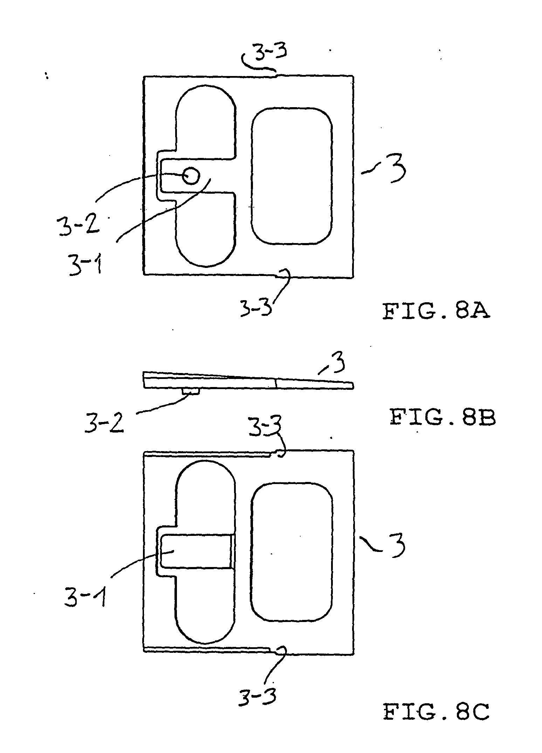

Das Abstands-Element 3 wird im Aufnahme-Schachtes 2 zwischen den Führungsbahnen 2-5 (s. FIG. 4C, FIG.4D, FIG. 5 und FIG.6) geführt.
Ein entsprechende Anschlag 2-6 im Aufnahme-Schacht 2 verhindert in Verbindung mit dem stufenförmigen Absatz 3-3 am Rand des Abstands-Elementes 3 (s. FIG.7, 8A und 8C) , daß es (3) vollends aus der rückwärtigen Öffnung 2-3 des Aufnahme-Schachtes 2 herausgeschoben werden kann.
Beim Einführen des Abstands-Elementes 3 in den Aufnahme-Schacht in die in FIG. 3 dargestellte Position ist dafür Sorge zu tragen ( durch Herunterdrücken des Federarmes), daß auf dem Verschiebungsweg die Rastnase 3-2 nicht in die Öffnung des Aufnahme-Schachtes eingreifen kann.
Sobald sich das Abstands-Element in der dargestellten Position (FIG. 3) befindet, kann das Einschub-Element durch die Öffnung 2-1 in den Aufnahme-Schacht 2 eingeführt werden. Dabei wird es quasi über die Schwelle 2-2 hinwegbewegt, bis schließlich diese Schwelle 2-2 in die Quernut 1-1 des Einschub-Elementes 1 eingreifen kann.
Ein weiteres Hineinschieben des Einschub-Elementes 1 in den Aufnahme-Schacht 2 wird dadurch verhindert, daß seine (1) nach außen stehenden Randteile 1-2 an den Rand 2-5 der Öffnung 2-1 des Aufnahme-Schachtes anschlagen.
In eingeschobener Position des Einschub-Elementes 1 kann nun das Abstands-Element 3 in Richtung E in den freien Zwischenraum zwischen der Oberseite 1s des Einschub-Elementes 1 und der Innenseite 2s der oberen Wandung des Aufnahme-Schachtes geschoben werden.
Dabei wird die auf dem Federarm 3-1 nach oben stehende Rastnase 3-2 durch die obere Innenseite des Aufnahme-Schachtes 2 nach unten gedrückt, bis sie bei weiterer Verschiebung des Abstands-Elements in Richtung E unter die Öffnung 2-4 gerät und dort einrastet.

Das Einschub-Element 1 ist - wie bereits erläutert- zugleich Scharnierblatt eines aus zwei Scharnierblättern 1 und 4 mit einer gemeinsamen Scharnierachse 5 bestehenden Scharniers. (FIG.3) .
Die Befestigung des Scharnierblattes z.B. an einem Schwenk-Deckel oder die Befestigung des Aufnahme-Schachtes 2 an einer Gepäckbox kann durch Schraubverbindungen o.ä. erfolgen- hierfür sind die Durchgangslöcher 4-1 bzw. 2-6 vorgesehen.
Die im eingeführten Zustand des Einschub-Elementes 1 aufeinander ausgerichteten Öffnungen M im Aufnahme-Schacht 2 und im Einschub-Element 1 dienen anderen Montagezwecken.

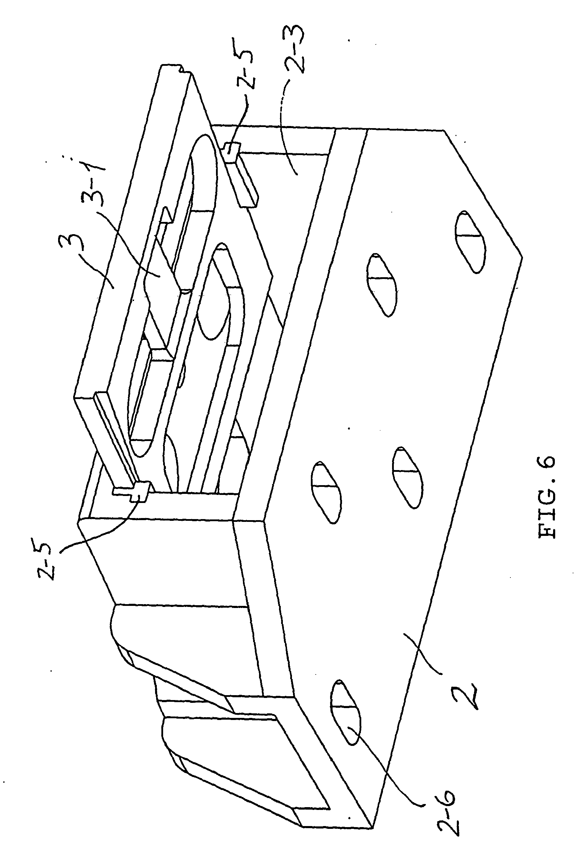

FIG. 5 zeigt
eine perspektivische Darstellung des Aufnahme-Schachtes 2 gemäß FIG. 3 mit schräger Blickrichtung auf dessen Unterseite und in dessen rückwärtige Öffnung 2-3.
Das Abstands-Element 3 (s. FIG.6) ist seitlich zwischen den Bahnführungen 2-5 angeordnet.

FIG. 6
eine perspektivische Darstellung des Aufnahme-Schachtes 2 gemäß FIG. 3 mit schräger Blickrichtung auf dessen Unterseite und in dessen rückwärtige Öffnung 2-3 mit teilweise herausstehendem Abstandselement 3.

Die in FIG. 5 und FIG.6 verwendeten Bezugszeichen sind die gleichen wie in FIG.3.

FIG. 7 zeigt
eine perspektivische Darstellung des Abstandselementes 3 gemäß FIG. 3;
Es zeigen
FIG. 8A die Drausicht,
FIG. 8B die Vorderansicht und
FIG. 8C die untere Ansicht des Abstands-Elementes.

Die jeweils verwendeten Bezugszeichen sind die gleichen.
Auf die vorstehende Beschreibung wird verwiesen.

FIG.9 zeigt
eine perspektivische Darstellung des Einschub-Elementes 1 gemäß FIG. 3 mit schräger Blickrichtung auf dessen Unterseite zur Verdeutlichung seines U-Profil-Abschnittes 9.

Als verwendete Materialien kommen für das Einschub-Element 1 und das Abstands-Element vorzugsweise Kunststoffe, insbesondere Polyetherimid oder Polyarylamid in Betracht.
Diese Teile sind in diesem Zusammenhang leicht im Spritzgußverfahren herstellbar.

Die erfindungsgemäße Aufnahme-Anordnung in ihrer Ausführungsform gemäß FIG. 3 weist insbesondere folgende Vorteile auf:
schnelle Montage,
hohe Belastbarkeit,
die Rastnase 3-2 wird bei der Verriegelung nicht von den auf das Einschub-Element wirkenden äußeren Kräften belastet, gleichbleibende Positionierung des Einschub-Elementes im Aufnahme-Schacht bei häufigem Entfernen und Wiedereinsetzen des Einschub-Elementes.

## Patentansprüche

1. Anordnung zur Aufnahme eines lösbar verriegelbaren Einschub-Elements, in dem
ein Einschub-Element (1), und
ein Aufnahme- Schacht (2) mit einer Einführ-Öffnung (2-1) zur Aufnahme dieses Einschub-Elements (1) in Einschub-Richtung D und ein positionierbares Abstands-Element (3), vorgesehen sind,
und in dem
im eingeschobenen Zustand des Einschub-Elementes (1) im Aufnahme-Schacht (2) zwischen dem Einschub-Element (1) und dem Aufnahme-Schacht (2) ein Abstandsbereich (A) ausgebildet ist,
sowie das Abstands-Element (3) im Abstandsbereich (A) derart anordnungsbar ist,
daß das Einschub-Element(1) im Aufnahme-Schacht (2) in einer Verriegelungs-Position (HP) fixiert ist,
in welcher es (1) durch einen Anschlag (2-2) an einer Bewegung aus der Einführ-Öffnung (2-1) heraus bzw. in welcher es durch einen Anschlag an einer weiteren Bewegung in Einschubrichtung (D) gehindert ist,
**dadurch gekennzeichnet, daß** das Abstands-Element (3) mit dem Aufnahme-Schacht (2) selbsttätig verriegelbar (2-4/3-2) ist,
und daß diese Verriegelung (2-4/ 3-2) lösbar ist.

2. Anordnung nach Anspruch 1,
**dadurch gekennzeichnet, daß**
das Einschub-Element (1) und der Aufnahme-Schacht (2) in Einschubrichtung (D) eine abfallende Schräge (1s bzw. 2s) aufweisen, wobei der Abstands-Bereich (A) im eingeschobenen Zustand des Einschub-Elementes (1) im Aufnahme-Schacht (2) zwischen der Schacht-Schräge (2S) und der Einschub-Element-Schräge (1S) ausgebildet ist.

3. Anordnung nach Anspruch 1,
**dadurch gekennzeichnet, daß**
der Anschlag (2-2) eine an der Einführ-Öffnung (2-1) des Aufnahme-Schachtes (2) angeordnete Schwelle ist,
und daß das Einschub-Element (1) über die Schwelle (2-2) hinweg in den Aufnahme-Schacht (2) einführbar ist.

4. Anordnung nach Anspruch 1,
**dadurch gekennzeichnet, daß**
der Aufnahme-Schacht (2) quer zur Einschubrichtung (D) einen rechteckigen Querschnitt,
und daß das Einschub-Element (1) quer zur Einschubrichtung (D) einen rechteckigen Querschnitt oder eine U-Profil-Gestaltung aufweist.

5. Anordnung nach Anspruch 1,
**dadurch gekennzeichnet, daß** das
Abstands-Element(1) im Aufnahme-Schacht (2) verschiebbar angeordnet ist,
daß das Abstands-Element (3) einen Federarm (3-1) mit einer in Richtung der Aufnahme-Schacht-Wandung wirkenden Rastnase (3-2) aufweist,
und daß bei Verschiebung des Abstands-Elementes (3) im Aufnahme-Schacht (2) die Rastnase (3-2) in eine Öffnung (2-4) der Aufnahme-Schacht-Wandung selbsttätig einrastbar ist.

6. Anordnung nach Anspruch 5,
**dadurch gekennzeichnet, daß**
die Rastverbindung (3-2 / 2-4)durch Herausdrücken der Rastnase (3-2) aus der Öffnung (2-4) unter Verschiebung des Abstand-Elementes (3) lösbar ist.

7. Anordnung nach Anspruch 5,
**dadurch gekennzeichnet, daß**
das Abstandselement (3) in seiner Verschieberichtung keilförmig ausgebildet ist.

8. Anordnung nach Anspruch 1 oder 5,
**dadurch gekennzeichnet, daß**
im Aufnahme-Schacht eine Führungbahn (2-5) für das Abstands-Element (3) vorgesehen ist.

9. Anordnung nach Anspruch 8,
**dadurch gekennzeichnet, daß**
die Führungsbahn (2-5) im hinteren Teil des Aufnahme-Schachtes (2) an der der Einführ-Öffnung (2-1) abgewandten Seite angeordnet ist.

10. Anordnung nach einem der Ansprüche 1 oder 5 bis 6,
**dadurch gekennzeichnet, daß**
das Abstands-Element (3) seitwärts einen Absatz (3-3) aufweist und daß im Aufnahmeschacht (2) ein - eine weitere Verschiebung des Abstands-Elementes in Richtung (D) verhindernder -Anschlag (2-6) für diesen Absatz (3-3) angeordnet ist.

11. Anordnung nach Anspruch 1,
**dadurch gekennzeichnet, daß** das
Einschub-Element (1) am Ende seines Einschub-Bereiches eine stufenförmige Aussparung (1-1) aufweist,
daß der Anschlag (2-2) als Schwelle an der Einführ-Öffnung (2-1) des Aufnahmeschachtes (2) ausgebildet ist,
und daß im eingeschobenen Zustand des Einschub-Elementes (1) im Aufnahme-Schacht (2) die stufenförmige Aussparung(1-1) die Schwelle (2-2) hintergreift.

12. Anordnung nach Anspruch 1,
**dadurch gekennzeichnet, daß**
das Einschub-Element (1) am Ende seines Einschub-Bereiches nach außen stehende Vorsprünge (1-2) aufweist, welche im eingeschobenen Zustand des Einschub-Elementes (1) im Aufnahme-Schacht (2) an den Rand (2-5) der Einführ-Öffnung (2-1) des Aufnahme-Schachtes (2) anschlagen.

## Claims

1. An assembly for receiving a releasable lockable insert element, in which an insert element (1), and a receiving duct (2) with an insert opening (2-1) to receive this insert element (1) in the insertion direction (D) and a locatable spacer element (3) are provided,
and in which in the inserted condition of the insert element (1) a spacing zone (A) is formed in the receiving duct (2) between the insert element (1) and the receiving duct (2),
and also the spacer element (3) can be so arranged in the spacing zone (A) that the insert element (1) is fixed in the receiving duct (2) in a locking position (HP),
in which it (1) is prevented from moving out of the insert opening (2-1) by an abutment (2-2) and/or in which it is prevented from further movement in the insertion direction (D) by an abutment,
**characterised in that** the spacer element (3) can be automatically locked (2-4/3-2) with the receiving duct (2), and **in that** this locking action (2-4/3-2) is releasable.

2. An assembly according to Claim 1,
**characterised in that** the insert element (1) and the receiving duct (2) have a respective slope (1s and 2s) descending in the insertion direction (D), wherein in the inserted condition of the insert element (1) the spacing zone (A) is formed in the receiving duct (2) between the duct slope (2S) and the insert element slope (1S).

3. An assembly according to Claim 1,
**characterised in that** the abutment (2-2) is a ridge provided at the insert opening (2-1) of the receiving duct (2), and **in that** the insert element (1) can be inserted into the receiving duct (2) over the ridge (2-2).

4. An assembly according to Claim 1,
**characterised in that** the receiving duct (2) is of rectangular cross-section transversely to the insertion direction (D),
and **in that** the insert element (1) is of rectangular cross-section or of U-profile configuration transversely to the insertion direction (D).

5. An assembly according to Claim 1,
**characterised in that** the spacer element (1) [sic] is arranged to be displaceable in the receiving duct (2),
**in that** the spacer element (3) has a spring arm (3-1) with a detent projection (3-2) acting in the direction of the receiving duct wall,
and **in that** upon displacement of the spacer element (3) in the receiving duct (2) the detent projection (3-2) can engage automatically in an opening (2-4) of the receiving duct wall.

6. An assembly according to Claim 5,
**characterised in that** the detent connection (3-2/2-4) can be released by pressing the detent projection (3-2) out of the opening (2-4) while displacing the spacer element (3).

7. An assembly according to Claim 5,
**characterised in that** the spacer element (3) is of wedge-shape form in its displacement direction.

8. An assembly according to Claim 1 or 5,
**characterised in that** a guide path (2-5) for the spacer element (3) is provided in the receiving duct.

9. An assembly according to Claim 8,
**characterised in that** the guide path (2-5) is provided in the rear part of the receiving duct (2) on the side remote from the insert opening (2-1).

10. An assembly according to any one of Claims 1 or 5 to 6,
**characterised in that** laterally the spacer element (3) has a shoulder (3-3), and **in that** an abutment (2-6) for this shoulder (3-3) is provided in the receiving duct (2), which abutment prevents further displacement of the spacer element in the direction (D).

11. An assembly according to Claim 1,
**characterised in that** at the end of its insertion zone the insert element (1) has a step-shaped recess (1-1),
**in that** the abutment (2-2) is in the form of a ridge at the insert opening (2-1) of the receiving duct (2),
and **in that** in the inserted condition of the insert element (1) in the receiving duct (2) the step-shaped recess (1-1) engages behind the ridge (2-2).

12. An assembly according to Claim 1,
**characterised in that** at the end of its insertion zone the insert element (1) has outwardly protruding projections (1-2) which, in the inserted condition of the insert element (1) in the receiving duct (2), abut against the edge (2-5) of the insert opening (2-1) of the receiving duct (2).

## Revendications

1. Dispositif pour recevoir un élément enfichable, verrouillable de manière amovible, comprenant
un élément enfichable (1) et un logement de réception (2) muni d'un orifice d'entrée (2-1) pour recevoir cet élément enfichable (1) dans la direction d'enfichage (D) et un élément d'écartement (3) qui peut être positionné et
à l'état engagé de l'élément enfichable (1) dans le logement de réception (2), on a une zone d'écartement (A) entre l'élément enfichable (1) et le logement de réception (2),
et l'élément d'écartement (3) se place dans la zone d'écartement (A) de façon que l'élément enfichage (1) soit bloqué dans le logement de réception (2) dans une position de verrouillage (HP),
dans laquelle cet élément (1) est immobilisé par une butée (2-2) pour sortir de l'orifice d'introduction (2-1) ou dans laquelle il est bloqué par une butée contre tout autre mouvement dans la direction d'enfichage (D),
**caractérisé en ce que**
l'élément d'écartement (3) est verrouillable (2-4/ 3-2) automatiquement au logement de réception (2) et ce verrouillage (2-4/3-2) est amovible.

2. Dispositif selon la revendication 1,
**caractérisé en ce que**
l'élément enfichable 1 et le logement de réception (2) ont une pente descente (1s, 2s) dans la direction d'enfichage (D),
la zone d'écartement (A), est réalisée entre la rampe (2S) du logement et la rampe (1S) de l'élément enfichable (1) lorsqu'il est en position engagée dans le logement de réception (2).

3. Dispositif selon la revendication 1,
**caractérisé en ce que**
la butée (2-2) est un seuil prévu au niveau de l'orifice d'introduction (2-1) du logement de réception (2) et
l'élément enfichable (2) peut être introduit dans le logement de réception (2) par-dessus le seuil (2-2).

4. Dispositif selon la revendication 1,
**caractérisé en ce que**
le logement de réception (2) a une section rectangulaire dans la direction transversale à la direction d'enfichage (D) et
l'élément enfichable (1) a une section rectangulaire ou une forme de profil en U, transversalement à la direction d'enfichage (D).

5. Dispositif selon la revendication 1,
**caractérisé en ce que**
l'élément d'écartement (1) est coulissant dans le logement de réception (2),
l'élément d'écartement (3) comporte un bras de ressort (3-1) avec un bec d'encliquetage (3-2) agissant dans la direction de la paroi du logement de réception et
lors du coulissement de l'élément d'écartement (3) dans le logement de réception (2), le bec d'encliquetage (3-2) s'accroche automatiquement dans une ouverture (2-4) de la paroi du logement de réception.

6. Dispositif selon la revendication 5,
**caractérisé en ce que**
la liaison d'encliquetage (3-2/2-4) est amovible par dégagement du bec d'encliquetage (2-2) hors de l'orifice (2-4) en coulissant l'élément d'écartement (3).

7. Dispositif selon la revendication 5,
**caractérisé en ce que**
l'élément d'écartement (3) a une forme de coin dans sa direction de coulissement.

8. Dispositif selon la revendication 1 ou 5,
**caractérisé en ce que**
le logement de réception comporte un chemin de guidage (2-5) pour l'élément d'écartement (3).

9. Procédé selon la revendication 8,
**caractérisé en ce que**
le chemin de guidage (2-5) est prévu dans la partie arrière du logement de réception (2) sur le côté opposé à l'orifice d'introduction (2-1).

10. Procédé selon l'une des revendications 1 ou 5 à 6,
**caractérisé en ce que**
l'élément d'écartement (3) comporte un épaulement (3-3) sur le côté et dans le logement de réception (2) il est prévu une butée (2-6) pour cet épaulement (3-3), qui évite que de l'élément d'écartement ne continue de coulisser dans la direction (D).

11. Procédé selon la revendication 1,
**caractérisé en ce que**
à l'extrémité de sa région d'enfichage, l'élément enfichable (1) comporte une cavité (1-1) étagée,
la butée (2-2) forme un seuil à l'orifice d'entrée (2-2) du logement de réception (2) et
à l'état engagé de l'élément enfichable (1), dans le logement de réception (2), la cavité (1-1) étagée passe derrière le seuil (2-2).

12. Procédé selon la revendication 1,
**caractérisé en ce que**
l'élément enfichable (1) comporte à l'extrémité de sa zone d'enfichage, des parties en saillie (1-2) dirigées vers l'extérieur, et qui, lorsque l'élément enfichable (1) est à l'état engagé dans le logement de réception (2), butent contre le bord (2-5) de l'orifice d'introduction (2-1) du logement de réception (2).
